# EUROPEAN PATENT APPLICATION

(11) **EP 4 502 846 A1**
(43) Date of publication of application: **05.02.2025**
(21) Application number: 23189022.9
(22) Date of filing: 01.08.2023
(51) Int. Cl.: G06F 21/62, G06N 3/098, H04W 12/02

(54) **DIALOGUE-SYSTEM, METHOD TO OPERATE IT, SOFTWARE-SERVICE-SYSTEM COMPRISING THE DIALOGUE-SYSTEM, COMPUTER SOFTWARE AND A COMPUTER READABLE MEDIUM TO OPERATE AND EXECUTE COMPUTER SOFTWARE**

(71) Applicant: Siemens Aktiengesellschaft, 80333 München (DE)
(72) Inventor: Johnson, Rebecca, 81739 München (DE); Singh, Saurabh Narayan, 81739 München (DE)
(74) Representative: Siemens Patent Attorneys

(57) **Abstract**

The invention relates to a dialogue-system, a method to operate it, software-service-system comprising the dialogue-system, computer software and a computer readable medium to operate and execute computer software. The invention especially provides a dialogue-system, e.g., an online-system using a digital identity, like an avatar-based-online-dialogue-system. The present invention disclosures a technology and methodology to enable federated learning based on user behavior, but rather than being accumulated and evolved at the centralized servers of - for example - hyper scalars and big data silos, the evolution of model takes place at individual edge devices whereas the data source is administered, controlled and/or distributed.

## Description

The invention relates to a dialogue-system, a method to operate it, software-service-system comprising the dialogue-system, computer software and a computer readable medium to operate and execute computer software. The invention especially provides a dialogue-system, e.g., an online-system using a digital identity, like an avatar-based-online-dialogue-system.

Dialogue-Systems like online-dialogue-systems, for example in form of chatbots, are becoming increasingly popular as online method for product and service providers to interact with their customers and/or users. Digital identities like avatars are a form of software agent and may be referred to as chatbots, chatterbots, Artificial Conversational Entities, conversational agents, smart assistants, or other such terms.

An avatar-based-online-dialogue-system is a system that serves as a steering tool and/or mimics conversation, either by voice-, language- and/or text-based input, with a user so as to provide them with information and services and also receive and store information and/or data from and about the user.

User profiles have been used by companies and organizations to create personalized suggestions and services catering to individual user needs across the spectrum of web2 organization. But what it has led to is creation of Data Silos and ruthless collection of all user data with no transparency regarding the usage of data. On one hand, users are not in control of their data, on the other, the creation of user profile is concentrated in the hand of few big players. Smaller websites do not have the amount of user activity needed to create a user profile and they buy user data from larger companies like Facebook^{®} and/or google^{®} to create personalized offerings. This exchange of data is also beyond the control of actual user whose data is being shared.

Meanwhile, web2 and/or cloud-based software architecture is mostly based on heavy processing of enormous amounts of data. While interacting - for example with the avatar - in industrial metaverse, the clients, machines, and/or users give in a lot of very personal information without having an idea where or what these data finally uses.

In Metaverse, for example industrial metaverse, where user profiles and digital identities will be even more detailed compared to the data that is today owned and collected by the likes of - for example Facebook^{®} and/or google^{®} - it is important to create a system where the end user can not only control their data, but also be in control of when, where and with whom the data is shared. It is also important to do this without hindering the personalization requirements of metaverse. We would not want a user entering an application and having to create their profile and digital identity each time they use the application from the very beginning again.

It is therefore object of the present invention to create an architecture and methodology to overcome these challenges and provide more equitable software-architecture with broader control in the hands of owner of user digital identities and/or digital user profiles.

This object is solved by the present invention as disclosed in the present description and claims.

Accordingly, a dialogue-system is subject of the present invention, the dialogue-system comprising several components, all components being connected among each other by suitable interfaces for two directional data transmission and reception of data:
- component **A)** being one or more processors configured to operate a user digital identity, e.g., an user avatar application "**UAA**" the application being suitable to create, develop and maintain the digital identity of the user and/or the user profile,
- component **B)** being a user managed data storage "**UMDS**" in form of a storage unit suitable to store, save and protect data within the edge device that the user is using to interact and/or communicate with an overall software architecture, like social- and/or industrial-networks, e.g., metaverse,
- component **C)** being a user identity interface, like an avatar interface "**UAI**" in form of a standardized interface which can read the user avatar info and/or customize the services based on this info,
- component **D**) one or more processors configured to operate a federated learning algorithm being a machine learning algorithm which learns on distributed data sets based but accumulate and stores the data of the model at a centralized location and
- component **E)** data administration and data management console "**DMC**" being for the user a device to control and/or administer information and data related to him and/or his avatar, in order to enable user to decide which applications get to have access to which parts of the user's avatar.

Besides, it is another subject of the present invention to provide a method to operate a dialogue-system the method comprising the steps of
- Creation of user profile and/or avatar
- plugging in user avatar in applications
- evolution of user avatar
- access control of user data from applications.

A software-service-system comprising the online-dialogue-system, computer software and a computer readable medium to operate and execute computer software are further subjects ot the present invention.

The term "avatar" is used for any kind of digital identity of a user, a group of users and so on. This term is in the content of the present application not limited to human looking avatars only.

However, data referring to the user profile are not part of the avatar.

An "online-dialogue-system" as referred to in this description may be a conversation-system, a chatbot-system and/or a conversational agent "CA". This may be - for example - a computer and/or online-web2 or online web3-based system intended to converse with a human user.

Independent of the grammatical term usage of the term "user" or "human user", individuals with male, female or other gender identities are included within the term.

Dialogue-systems like an online-dialogue-system may employ one or more of text, speech, graphics, haptics, gestures, and/or other modes for communication on both the input and output channel. Modules of the online-dialogue-system are - for example but not being limited to -
- input and output modules, processing modules, storage modules, access, and connection to Internet of Things "IoT", computer with neuronal networks to apply artificial intelligence during the conversation, communication and/or interaction, optional connections to different applications, smart phone applications and/or cloud-applications,
- one or more processors being part of the above mentioned "processor-modules",
- the connection to a device being configured to work with and/or process artificial intelligence "AI",
- one or more automatic speech recognizer/generator
- one or more gesture recognizer/generator
- one or more handwriting recognizer/generator
- one or more natural language understanding unit/generating units
- one or more text-to-speech engine
- on or more talking heads like spoke robot or avatar.

It has been the general understanding of the present invention that the General Data Protection Regulation "GDPR" allows users to request deletion of all the data associated with the data accumulator and service providers, in other words the user can request deletion of their profile. However, when user wants to reuse the service, a new profile is created from scratch. This may be disadvantageous for many reasons and overall it is much more comfortable for user to have his own data administration and/or be able to decide on his own about access to his data.

"Created from the scratch" means that a new profile is created from an empty profile mask. So, there is no profile, e.g., no user profile, at the beginning of this process and a new profile at the end.

For some use cases, when user having used a service for few years and this user requests data deletion this can be quite unfavorable. At that point, the service has a considerable amount of data on user behavior and has created a user avatar which can provide good recommendations to the users. Once the user requests deletion of the data and wants to reuse the service the recommendations will not be tailored to user needs.

Since the user data is not controlled by the users, companies are allowed to not only collect immense amount of data, but also be able to sell those user profiles and avatars to other companies. This leads to a good, sometimes scary, recommendation based on user behavior even in new services that user has never used before. But the loss of control over the data is not good for the user, especially the end user.

The present invention disclosures a technology and methodology to enable federated learning based on user behavior, but rather than being accumulated and evolved at the centralized servers of - for example - hyper scalars and/or big data silos, the evolution of model takes place at individual edge devices whereas the data source is administered, controlled and/or distributed. The data comes from various applications that the user interacts with. Based on the user behavior data, the user profile and/or avatar evolve, and user can choose to provide parts of this information to different applications so that the services can be customized for individual or group of users.

"Federated learning" - often referred to as "collaborative learning" is a decentralized approach to training machine learning models. It doesn't require an exchange of data from client devices to global servers. Instead, the raw data from edge devices is used to train the model locally, increasing data privacy.

Federated learning is a machine learning technique that trains an algorithm via multiple independent sessions, each using its own dataset. This approach stands in contrast to traditional centralized machine learning techniques where local datasets are merged into one training session, as well as to approaches that assume that local data samples are identically distributed.

Federated learning may be seen as alternative to pooled data learning.

According to an example of one preferred embodiment of the invention, the access control of user data is executed in the following steps- :
A user gets a request to share the profile data,
1. The user views the request in the DMC
2. If the user is satisfied with the request, they can choose to approve it
3. Once a request is approved, a token is issued to the requestor.
4. The token contains information regarding duration of validity, identification of fields which the request can read and proof of issuance by the user.
   a. Validity: The duration for which the token will be valid
   b. Fields of request: The fields which the request is allowed to have access to. For example, a request asks for user name and favourite colour. The token would contain that information. If in future the requestor tries to get fields other than name and colour, the request will be denied even if it has a valid token.
   c. Proof of issuance: This is a cryptographic signature on the token which proves that this particular token was issued by the user who owns the profile.
5. The requestor gets the token and saves it.
6. Every time requestor wants the user profile, they send a request along with the token.
7. If the token is validated and the request is valid, the profile is returned.
8. In case the user wants to revoke access for a particular application or request, the user can simply revoke the token from the DMC. Now when the next request comes, it will be invalid.

The data-storage-unit preferably shows one or more features for security and/or safety, because it should be sure, that access is well protected. For example, the security unit can only be accessed via an API. The APIs would need a valid token to provide any results. Using the token mechanism explained in previous step, the data storage unit is secured. Additionally, or alternatively, the data storage unit may store the data in an encrypted format.

According to a preferred embodiment, the storage unit can only be accessed via APIs. These APIs restrict access via tokens which can only be issued by the owner of the profile, or some administrative authority entitled to issue. Detailed description above.

The storage unit can be part of the individual edge device but may be as well part of another device as long as the access to the storage unit is controlled by the user or an administrative authority, for example one that has been chosen by the user.

"Requestor" is any kind of machine and/or human initiated attempt to gather data belonging to the user profile and/or the digital identity of the user being stored in the UMDS (= user managed data storage).

A "token" is a security token, which may be any kind of peripheral device used to gain access to an electronically restricted resource. The token is used in addition to, or in place of, a password, pin code etc. It acts like an electronic key to access something. Examples of exchange tokens are Binance Coin or BNB token, Gemini USD, FTX Coin for FTX, Exchange, OKB for Okex exchange, KuCoin Token, Uni token, HT for Huobi exchange, Sushi and CRO for Crypto.com.

In another embodiment an automatic transmission of the token to open access of the personal information units as stored in the user managed data storage UMDS is performed by an application programming interface (API). In this case, the API is responsible for the transmission of the personal information. Optionally, the API can preprocess the personal information units.

Based on e.g., organization requirement, the API can be a NLP (Natural Language Processing) based API where questions posed in conversational language will be responded as the user would.

On the other hand, APIs would also provide query capability in form of structured queries so that applications can be designed to mimic and support user behavior.

The user can choose to purchase/create and maintain the control of their own personality using the PDML. And when the user joins a new website, they can choose to provide their PDML to the website via a "bring your own key" access policy. The organization can query the personality and behavior using the APIs, but the control remains with the user.

"PDML" stands for Packet Description Markup Language, a commonly used file format. PDML - for example - may be the format network packet dissections are saved in.

According to an example of one preferred embodiment of the invention, the creation of user profile and/or avatar includes the following steps - see figure - :
When user starts his application, for example his metaverse journey, the application starts with
"**C1**" - creation of user avatar within **UAA** being component **A**
"**C2**" - user starts with answering some basic questions,
"**C3**" - user profile is created based on these answers,
"**C4**" - in another iteration, user profile can also be - at least partially - be trained locally - being so called "federated learning" of the avatar and
"**C5**" - The avatar, the user profile and/or related data are stored in **UMDS** being component **B**.

According to another preferred embodiment of the invention the plugging in user avatar applications may preferably involve the following components and/or process steps P1 to P6:
P1: **UAI** - component **C - User Avatar Interface -** defines which interface would be needed to read what kind of data,
P2: User avatar contains various kind of data sets, for example:
   - Directly readable data sets like username, user age, nationality, gender identity, profession, religion, marital status,
   - Complex data sets like color profile. For example, which colors does user prefer when it comes to different objects, different applications, and different screens,
   - Evolving complex data information like user preferences. For example, which kind of games does the user like this month. Are there any new song preferences and genres that the user has recently been interested in.
P3: All these different kind of data sets are stored as part of **UMDS** - being component **B - user managed data storage** -.
P4: When the user joins an application, an access token for accessing the **UMDS** is created,
P5: The user and the application agree upon the shared data via **DMC** - being component **E** - **data management console**.
P6: The application can than access the user avatar and profile via the **UAI** being component **C** - **User Avatar Interface**.

According to another preferred embodiment of the invention the evolution of user avatar may preferably involve the following components and/or process steps E1 to E3:
E1: Since the user interaction data is generated at the application, the user profile evolution can be done via two ways. Based on the agreement between the user and the application either can be used:
   - a) user profile is evolved at the application and the accumulation of the profile takes place at the **UMDS** using a federated learning algorithm
   - b) the user interaction data is sent directly to the **UMDS** and the collection and evolution takes place centrally,
E2: Either the user interaction data of the evolved user profile is sent back to **UMDS**,
E3: At **UMDS**, the existing user profile is evolved based on the data and/or evolved profile.

According to another preferred embodiment of the invention the access control of user data may preferably involve the following components and/or process steps A1 to A4:
A1:Even though user data is never sent to the application, user profile can still contain personal information which user might not want to share with an application.
A2: **DMC** - being component **E** - **data management console** - allows user to control the parts of user profile that user wants to share with the application.
A3: Using **DMC**, user can see the data that the application is requesting and define which data sets is he/ are they willing to share,
A4: **DMC** also provides user the capability to request user related information deletion from individual applications.

The present invention shows a whole bunch of advantages:
- Allows users to control their profile. In existing applications, this is not possible without complete deletion of user profile from applications.
- Allows users to share parts of the user profile based on application requirements.
- Allows applications to create personalized recommendation regarding user without having to store and analyze user data.
- Allows secure mechanism for user profile creation and handling.
- Allows user to become conscious about what is stored as his "user behavior".
- Allows user to differentiate his appearance between applications.
- Allows user - for example by counting the number of requests - to became aware about what is worthy for big data to be collected and/or secured and what data is not so relevant.
- The invention addresses critical issues such as data privacy, data security, data access rights.
- The invention further addresses the trustworthiness of the devices and the impact of malicious actors on the avatar and/or user profile.

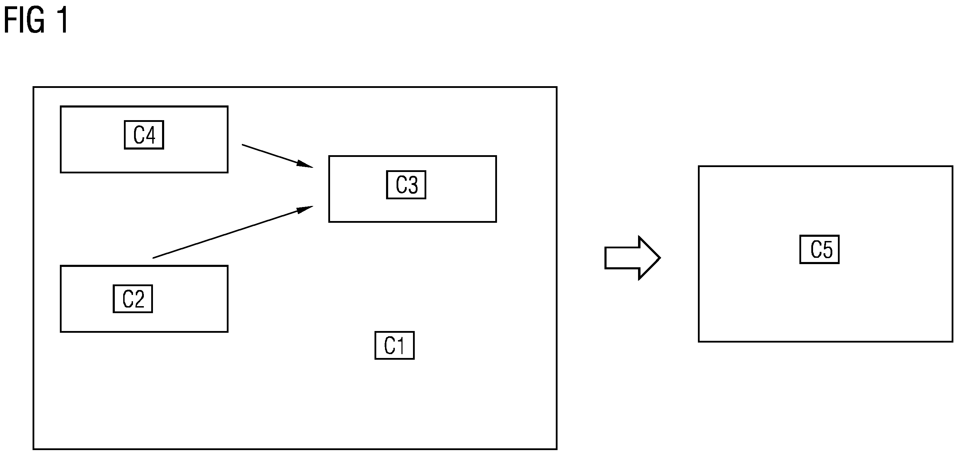

## Claims

1. Dialogue-system is subject of the present invention, the dialogue-system comprising several components, all components being connected among each other by suitable interfaces for two directional data transmission and reception of data:
- component **A)** being one or more processors configured to operate a user digital identity, e.g., an user avatar application "**UAA**" the application being suitable to create, develop and maintain the digital identity of the user and/or the user profile,
- component **B)** being a user managed data storage "**UMDS**" in form of a storage unit suitable to store, save and protect data within the edge device that the user is using to interact and/or communicate with an overall software architecture,
- component **C)** being a user identity interface, like an avatar interface "**UAI**" in form of a standardized interface which can read the user avatar info and/or customize the services based on this info,
- component **D**) one or more processors configured to operate a federated learning algorithm being a machine learning algorithm which learns on distributed data sets based but accumulate and stores the data of the model at a centralized location and
- component **E)** data administration and data management console "**DMC**" being for the user a device to control and/or administer information and data related to him and/or his avatar, in order to enable user to decide which applications get to have access to which parts of the user's avatar.

2. Method to operate a dialogue-system the method comprising the steps of
- Creation of user profile and/or avatar
- plugging in user avatar in applications
- evolution of user avatar
- access control of user data from applications.

3. A method according to claim 2 further comprising the steps of:
- receiving a request to share user profile data and/or avatar,
- viewing the request in the DMC
- deciding about approval or rejection of the request.

4. A method according to claim 3, further comprising the step of
- storing the data about the request and the result of the decision.

5. A method according to one of claims 3 or 4, further comprising the step of
- using the stored data for training of an artificial intelligence.

6. A method according to one of claims 2 to 5, further comprising the step of
- issuing a token to the requestor.

7. A method according to one of claims 2 to 6, wherein the step of issuing a token takes place automatically.

8. A method according to one of claims 2 to 6, wherein the step of issuing a token takes place manually.

9. A method according to one of claims 2 to 8, further comprising a step of proof of issuance after issuing of the token.

10. A method according to one of claims 2 to 9, further comprising the step of revoking the token.

11. A method according to claim 10, wherein the revocation of the token takes place in the DMC, being the data management console.

12. A software-service-system comprising the online-dialogue-system according to claim 1.

13. A computer software which, when executed by the system of claim 1, causes the system to carry out the method according to one of claims 2 to 11.

14. A computer readable medium suitable to operate and execute the computer software according to claim 13.
